# EUROPÄISCHE PATENTSCHRIFT

(11) **EP 2 479 465 B1**
(45) Veröffentlichungstag und Bekanntmachung des Hinweises auf die Patenterteilung: **17.04.2013**
(21) Anmeldenummer: 11000183.1
(22) Anmeldetag: 12.01.2011
(51) Int. Cl.: F16K 27/00, F16K 31/06, F16K 35/10

(54) **Ventileinrichtung mit Handhilfsbetätigungseinrichtung**
Valve device with manual override device
Dispositif de soupape doté d'un dispositif d'actionnement auxiliaire manuel

(43) Veröffentlichungstag der Anmeldung: 25.07.2012
(73) Patentinhaber: FESTO AG & Co. KG, 73734 Esslingen (DE)
(72) Erfinder: Kiefer, Thomas, 70806 Kornwestheim (DE); Schubert, Dominik, 73061 Ebersbach (DE)
(74) Vertreter: Abel, Martin

(56) Entgegenhaltungen:
- EP-A2- 1 035 362
- EP-A2- 1 041 291
- WO-A1-03/104696
- DE-A1-102005 015 201
- DE-A1-102008 005 834
- DE-B3-102007 027 340
- DE-B3-102008 011 661
- DE-U1-202005 005 908

## Beschreibung

Die Erfindung betrifft eine Ventileinrichtung, mit einer ein Ventilgehäuse aufweisenden, elektrisch betätigbaren Ventileinheit, die zur manuellen Betätigung mit einer Handhilfsbetätigungseinrichtung ausgestattet ist, die einen beweglich in dem Ventilgehäuse angeordneten Betätigungsstößel aufweist, der über einen von außerhalb des Ventilgehäuses zugänglichen Betätigungsendabschnitt verfügt und der zum einen im Rahmen einer Tastbetätigung durch drückende Beaufschlagung des Betätigungsendabschnittes zwischen einer unbetätigten Grundstellung und einer betätigten Arbeitsstellung verschiebbar ist und zum anderen im Rahmen einer Drehbetätigung durch Verdrehen des Betätigungsendabschnittes in der Arbeitsstellung lösbar verriegelbar ist, und mit einem Abdeckelement, das relativ zu dem Ventilgehäuse in mehreren unterschiedlichen Stellungen positionierbar ist, um die Zugänglichkeit des Betätigungsendabschnittes zu beeinflussen, wobei eine dieser Stellungen eine Teilfreigabestellung ist, in der das Abdeckelement derart an dem Ventilgehäuse fixiert ist, dass es den Betätigungsendabschnitt unter Ermöglichung der Tastbetätigung gegen einen die Drehbetätigung bezweckenden Zugriff abschirmt.

Aus der DE 10 2008 005 834 A1 ist eine derartige Ventileinrichtung bekannt, die über eine mit einem elektrisch betätigbaren Vorsteuerventil ausgestattete Ventileinheit verfügt, die mit einer Handhilfsbetätigungseinrichtung ausgestattet ist. Die Handhilfsbetätigungseinrichtung weist einen Betätigungsstößel auf, der mit dem Vorsteuerventilglied der ventileinheit kooperieren kann. Der Betätigungsstößel wird an einem Betätigungsendabschnitt betätigt, wobei grundsätzlich zwei Betätigungsmöglichkeiten bestehen, zum einen eine Tastbetätigung und zum anderen eine Drehbetätigung. Bei einer Tastbetätigung wird der Betätigungsstößel solange in einer auf das Vorsteuerventilglied einwirkenden Arbeitsstellung gehalten, wie er an seinem Betätigungsendabschnitt eine drückende Beaufschlagung erfährt. Bei Wegnahme der Drückkraft kehrt der Betätigungsstößel aufgrund einer rückstellend wirkenden Federeinrichtung in die Grundstellung zurück. Soll das Vorsteuerventil für längere Zeit ohne elektrische Unterstützung aktiviert bleiben, lässt sich der Betätigungsstößel in der Arbeitsstellung durch Drehbetätigung des Betätigungsendabschnittes lösbar verriegeln.

Bei der bekannten Ventileinrichtung ist der Ventileinheit ein als Sicherheitsabdeckung bezeichnetes Abdeckelement zugeordnet, das im Bereich des Betätigungsendabschnittes lösbar am Ventilgehäuse der Ventileinheit montierbar ist. Der montierte Zustand entspricht einer Teilfreigabestellung, da der zugeordnete Betätigungsstößel nur noch einen Teil seiner Funktionalität behält. Er kann nur noch tastend betätigt werden, indem mit Hilfe eines federelastisch aufgehängten Tastelementes der Sicherheitsabdeckung drückend auf den Betätigungsendabschnitt eingewirkt wird. Eine Drehbetätigung ist nicht möglich, weil das Tastelement den Betätigungsendabschnitt des Betätigungsstößels so abschirmt, dass sich von außen her kein Drehmoment in ihn einleiten lässt. Um außer der Tastbetätigung auch die Drehbetätigung zu ermöglichen, ist die Sicherheitsabdeckung lösbar an der Ventileinheit befestigt und kann somit abgenommen werden, so dass sie eine von der Ventileinheit entfernte Vollfreigabestellung einnimmt, in der der Betätigungsendabschnitt sowohl für die Tastbetätigung als auch für die Drehbetätigung frei zugänglich ist. Nachteilig ist in manchen Fällen, dass sich die Aktivierung der Handhilfsbetätigungseinrichtung nicht vollständig blockieren lässt, was bei sicherheitsrelevanten Anwendungen ab und an wünschenswert wäre.

Um die Betätigungsmöglichkeiten der Handhilfsbetätigungseinrichtung zu blockieren, wäre es im Falle der DE 10 2008 005 834 A1 zwar denkbar, anstelle der Sicherheitsabdeckung einen vollständig geschlossenen und über kein Tastelement verfügenden Verschlussdeckel über dem Betätigungsendabschnitt anzubringen. Dies hätte jedoch zur Folge, dass die Ventileinrichtung mit mehreren Elementen ausgestattet werden müsste, die wahlweise an der Ventileinheit montierbar sind. Damit verbunden wäre ein erhöhter Fertigungsaufwand und auch die Gefahr, dass das momentan nicht benötigte Zusatzelement verlorengeht.

Aus der DE 10 2007 027 340 B3 ist eine Ventileinrichtung mit Handhilfsbetätigungseinrichtung bekannt, bei der der Betätigungsstößel der Handhilfsbetätigungseinrichtung stets frei zugänglich ist und mithin an seiner Betätigung nicht gehindert werden kann.

In der DE 10 2008 011 661 B3 ist eine Ventileinrichtung beschrieben, die über eine Handhilfsbetätigungseinrichtung verfügt, deren Betätigungsstößel über einen schieberartig ausgebildeten Betätigungsendabschnitt verfügt. Dieser Betätigungsendabschnitt ist jederzeit frei zugänglich. Eine in dem Betätigungsendabschnitt ausgebildete Durchbrechung ist so platziert, dass eine zur Befestigung der Ventileinrichtung dienende Befestigungsschraube nur dann frei zugänglich ist, wenn die Handhilfsbetätigungseinrichtung deaktiviert ist.

Der Erfindung liegt die Aufgabe zugrunde, bei einer Ventileinrichtung der eingangs genannten Art eine Möglichkeit zu schaffen, um die Betätigung der Handhilfsbetätigungseinrichtung auf einfache und kostengünstige Weise bei Bedarf vollständig verhindern zu können.

Zur Lösung dieser Aufgabe ist in Verbindung mit den eingangs genannten Merkmalen vorgesehen, dass eine weitere der möglichen Stellungen des Abdeckelementes eine Sperrstellung ist, in der das Abdeckelement derart an dem Ventilgehäuse fixiert ist, dass es den Betätigungsendabschnitt sowohl gegen einen die Drehbetätigung bezweckenden Zugriff als auch gegen einen die Tastbetätigung bezweckenden Zugriff abschirmt.

Mithin besteht bei der erfindungsgemäßen Ventileinrichtung die Möglichkeit, ein und dasselbe Abdeckelement in wahlweise einer Teilfreigabestellung oder in einer Sperrstellung am Ventilgehäuse der Ventileinheit anzuordnen. Man kann also je nach Positionierung des Abdeckelementes entweder nur die Drehbetätigung verhindern und die Tastbetätigung zulassen (Teilfreigabestellung) oder beide Arten der Betätigung, also sowohl die Tastbetätigung als auch die Drehbetätigung, komplett verhindern (Sperrstellung). Letzteres bietet einen Sicherheitsaspekt dahingehend, dass unbefugtes Personal nicht ohne weiteres in der Lage ist, eine wie auch immer geartete Handbetätigung der Ventileinheit unabhängig von der standardmäßig vorhandenen elektrischen Betätigung vorzunehmen. Aufgrund des Umstandes, dass zur Definition sowohl der Teilfreigabestellung als auch der Sperrstellung ein und dasselbe Abdeckelement genutzt wird, lässt sich die im Vergleich zum Stand der Technik zusätzlich erreichte Sicherheit ohne gravierenden Mehraufwand verwirklichen.

Vorteilhafte Weiterbildungen der Erfindung gehen aus den Unteransprüchen hervor.

Es ist besonders vorteilhaft, wenn das Abdeckelement außer in der Teilfreigabestellung und in der Sperrstellung auch noch in einer weiteren, als Vollfreigabestellung bezeichneten Stellung positionierbar ist, in der der Betätigungsendabschnitt derart zugänglich ist, dass er sowohl für eine Tastbetätigung als auch für eine Drehbetätigung zur Verfügung steht. Mit ein und demselben Abdeckelement können somit drei unterschiedliche Funktionszustände der Handhilfsbetätigungseinrichtung definiert werden, und zwar einfach durch wahlweises Verändern der relativ zur Ventileinheit eingenommenen Position des Abdeckelementes.

Zweckmäßigerweise ist das Abdeckelement sowohl in der Teilfreigabestellung als auch in der Sperrstellung in lösbarer Weise an dem Ventilgehäuse fixiert, so dass es zum Wechseln seiner Stellung von dem Ventilgehäuse abgenommen werden kann bzw. muss. Für einen Wechsel zwischen der Teilfreigabestellung und der Sperrstellung lässt sich also das Abdeckelement jeweils vorübergehend vom Ventilgehäuse entfernen und anschließend mit neuer Position wieder an dem Ventilgehäuse fixieren.

Um das Abdeckelement in die Vollfreigabestellung zu verbringen, kann es von dem Ventilgehäuse zweckmäßigerweise abgenommen werden. Im vom Ventilgehäuse abgenommenen Zustand liegt es zweckmäßigerweise als bezüglich des Ventilgehäuses vollständig getrenntes, separates Element vor, das unabhängig von der Ventileinheit bis zum neuerlichen Gebrauch an geeigneter Stelle aufbewahrt werden kann. Selbstverständlich besteht auch die Möglichkeit, das Abdeckelement, beispielsweise über ein flexibles Halteband, so am Ventilgehäuse anzubinden, das es zwar von dem Ventilgehäuse abnehmbar ist, gleichwohl aber weiterhin eine als Verliersicherung dienende Verbindung zum Ventilgehäuse vorhanden ist.

Zur Anbringung des Abdeckelementes in der Teilfreigabestellung und in der Sperrstellung, ist außen an dem Ventilgehäuse im Bereich des Betätigungsendabschnittes zweckmäßigerweise ein Montageplatz vorhanden, an dem das Abdeckelement lösbar montierbar ist. Vorzugsweise lässt sich das Abdeckelement an diesen Montageplatz zur Einnahme von entweder der Teilfreigabestellung oder der Sperrstellung in bezüglich dem Ventilgehäuse unterschiedlichen Ausrichtungen montieren.

Das Abdeckelement verfügt zweckmäßigerweise über eine Hochachse und ist im an dem Montageplatz des Ventilgehäuses montierten Zustand so ausgerichtet, dass diese Hochachse senkrecht zu dem Montageplatz bzw. zu einer den Montageplatz definierenden Montagefläche verläuft. Die Teilfreigabestellung unterscheidet sich hierbei von der Sperrstellung dadurch, dass das Abdeckelement in diesen beiden Stellungen um 180° bezüglich der genannten Hochachse verdreht ist.

Zur lösbaren Fixierung des Abdeckelementes an dem Ventilgehäuse sind zweckmäßigerweise Mittel vorhanden, die eine Rastverbindung gestatten. Das Abdeckelement ist somit sowohl in der Teilfreigabestellung als auch in der Sperrstellung jeweils lösbar mit dem Ventilgehäuse verrastet.

Zur Realisierung der Rastverbindung verfügt das Abdeckelement, zweckmäßigerweise an seiner im montierten Zustand dem Ventilgehäuse zugewandten Unterseite, über mehrere Rastvorsprünge, die mit am ventilgehäuse ausgebildeten Rastvertiefungen lösbar in Eingriff bringbar sind, um entweder die Teilfreigabestellung oder die Sperrstellung einzunehmen. Die Rastvorsprünge und Rastvertiefungen sind insbesondere so ausgebildet, dass unabhängig davon, ob das Abdeckelement nun die Teilfreigabestellung oder die Sperrstellung einnimmt, stets die gleichen Rastvertiefungen des Ventilgehäuses mit den Rastvorsprüngen des Abdeckelementes kooperieren.

Damit sich das Abdeckelement trotz mit dem Ventilgehäuse eingegangener Rastverbindung bei Bedarf problemlos wieder von dem Ventilgehäuse lösen lässt, sind zweckmäßigerweise Maßnahmen vorgesehen, die ein leichtes Abhebeln des Abdeckelementes vom ventilgehäuse ermöglichen. Hierzu kann das Ventilgehäuse insbesondere eine bei montiertem Abdeckelement dem Radbereich dieses Abdeckelementes zugeordnete und dabei (nur) teilweise von dem Abdeckelement überdeckte Ausnehmung aufweisen, die als Demontageausnehmung bezeichnet sei und die das Ansetzen eines Hebelwerkzeuges, beispielsweise eines Schraubendrehers, ermöglicht.

Das Abdeckelement verfügt zweckmäßigerweise über einen in der Teilfreigabestellung und in der Sperrstellung für das teilweise bzw. das vollständige Abdecken des Betätigungsendabschnittes des Betätigungsstößels zuständigen Abdeckabschnitt, der vorzugsweise plattenförmig ausgebildet ist und hierbei durchaus entsprechend einer gewölbten Außenkontur des Ventilgehäuses auch eine gewölbte Struktur aufweisen kann.

Das Abdeckelement ist insbesondere so ausgebildet, das es bei Einnahme der Sperrstellung den Betätigungsendabschnitt vollständig abdeckt. Das Abdeckelement kann hierzu in dem den Betätigungsendabschnitt überdeckenden Bereich durchbrechungslos ausgebildet sein. Das vollständige Abdecken könnte allerdings auch dadurch gewährleistet werden, dass das Abdeckelement in dem bei Einnahme der Sperrstellung über dem Betätigungsendabschnitt liegenden Bereich zwar über eine oder mehrere Durchbrechungen verfügt, diese jedoch nicht geeignet sind, einen wie auch immer gearteten Durchgriff eines Betätigungswerkzeuges zu ermöglichen.

Um in der Teilfreigabestellung die Tastbetätigung des Betätigungsendabschnittes zu ermöglichen, ist das Abdeckelement in dem bei Einnahme der Teilfreigabestellung über dem Betätigungsendabschnitt liegenden Bereich zweckmäßigerweise mit einer den Durchgriff eines eine drückende Beaufschlagung des Betätigungsendabschnittes ermöglichenden Betätigungswerkzeuges zulassenden Durchbrechung versehen. In Draufsicht auf den Betätigungsendabschnitt gesehen liegt dieser Durchbruch zweckmäßigerweise neben dem Betätigungsendabschnitt, wenn das Abdeckelement in der Sperrstellung positioniert ist. Auf diese Weise lässt sich die Durchbrechung nur dann zur Tastbetätigung des Betätigungsendabschnittes nutzen, wenn das Abdeckelement in der Teilfreigabestellung angeordnet ist. Die Durchbrechung ist dabei insbesondere so ausgebildet, dass sie ein Betätigungswerkzeug, das prinzipiell zur Einleitung eines Drehmomentes in den Betätigungsendabschnitt geeignet wäre, an einem Eingriff in den Betätigungsendabschnitt und/oder an einem Verdrehen hindert, wenn es durch die Durchbrechung hindurchgesteckt ist. Auf diese Weise kann in der Teilfreigabestellung keine Drehbetätigung des Betätigungsendabschnittes erfolgen.

Vorzugsweise verfügt der Betätigungsendabschnitt an der in der Vollfreigabestellung des Abdeckelementes von außen her zugänglichen Stirnseite über einen das Ansetzen eines klingenförmigen Abschnittes eines Betätigungswerkzeuges ermöglichenden Querschlitz. Ein solches Betätigungswerkzeug ist beispielsweise ein Schraubendreher. Die Durchbrechung des Abdeckelementes hat hierbei insbesondere die Form eines Langloches, das dann, wenn das Abdeckelement in der Teilfreigabestellung positioniert ist, zwar ein Hindurchführen des Betätigungswerkzeuges zum Ausführen einer Tastbetätigung ermöglicht, nicht jedoch ein Verdrehen desselben, weil der klingenförmige Abschnitt durch die längsseitigen Ränder des Langloches unverdrehbar blockiert wird und/oder weil aufgrund einer sich mit dem Querschlitz überkreuzenden Ausrichtung des Langloches kein Eingriff in den Querschlitz möglich ist.

Die mit dem mindestens einen Abdeckelement ausgestattete Ventileinheit ist zweckmäßigerweise von vorgesteuerter Bauart, wobei sie über ein mit einem Hauptventilglied ausgestattetes Hauptventil und mindestens ein elektrisch betätigbares Vorsteuerventil verfügt, wobei das Vorsteuerventil zur fluidischen Betätigung des Hauptventils dient und wobei die Handhilfsbetätigungseinrichtung insbesondere mit einem Vorsteuerventilglied des Vorsteuerventils kooperiert. Insbesondere kann vorgesehen sein, dass der Betätigungsstößel der Handhilfsbetätigungseinrichtung in der Grundstellung vom Vorsteuerventilglied des Hauptventilgliedes abgehoben ist oder ohne Vorspannung oder mit nur geringer Vorspannung an diesem Vorsteuerventilglied anliegt, während er in der Arbeitsstellung unter Einwirkung auf das Vorsteuerventilglied relativ zu diesem verschoben ist und hierbei das Vorsteuerventilglied in einer betätigten Stellung hält.

Nachfolgend wird die Erfindung anhand der beiliegenden Zeichnung näher erläutert. In dieser zeigen:
- Figur 1: eine bevorzugte erste Bauform der erfindungsgemäßen Ventileinrichtung in einer perspektivischen Darstellung, wobei eine elektrofluidisch vorgesteuerte Ventileinheit und ein diesbezüglich die Vollfreigabestellung einnehmendes Abdeckelement ersichtlich ist und wobei strichpunktiert ein an der Ventileinheit vorhandener Montageplatz identifiziert ist, an dem sich das Abdeckelement zur wahlweisen Einnahme einer Teilfreigabestellung oder einer Sperrstellung anbringen lässt,
- Figur 2: eine Stirnansicht des in Figur 1 gezeigten Abdeckelementes mit Blickrichtung gemäß Pfeil II aus Fi-gur 1,
- Figur 3: eine in Richtung einer Hochachse des Abdeckelementes orientierte Draufsicht auf das Abdeckelement mit Blickrichtung gemäß Pfeil III aus Figur 1,
- Figur 4: eine Seitenansicht des aus Figur 1 ersichtlichen Abdeckelementes mit Blickrichtung gemäß Pfeil IV aus Figur 1,
- Figur 5: eine Draufsicht auf die Ventileinheit aus Figur 1, wobei ein zur lösbaren Anbringung des Abdeckelementes vorgesehener Montageplatz strichpunktiert angedeutet ist,
- Figur 6: die Ventileinheit aus Figuren 1 und 5 in einem Längsschnitt gemäß Schnittlinie VI-VI aus Figur 5,
- Figur 7: einen Querschnitt durch die Ventileinheit gemäß Schnittlinie VII-VII aus Figur 6 bei nicht daran montiertem Abdeckelement,
- Figur 8: den in Figur 6 umrahmten Ausschnitt VIII in einer vergrößerten Darstellung,
- Figur 9: einen der Figur 7 entsprechenden Querschnitt der Ventileinheit, wobei die durch Drehbetätigung verriegelte Arbeitsstellung des Betätigungsstößels ersichtlich ist,
- Figur 10: die Anordnung aus Figur 9 in einer der in Figur 8 entsprechenden Ausschnittsdarstellung,
- Figur 11: eine perspektivische Darstellung der Ventileinrichtung, wobei das Abdeckelement unter Einnahme seiner Teilfreigabestellung an der Ventileinheit montiert ist,
- Figur 12: eine Draufsicht auf die Anordnung der Figur 11 mit Blickrichtung gemäß Pfeil XII,
- Figur 13: einen Querschnitt durch die Ventileinrichtung der Figuren 11 und 12 entsprechend Schnittlinie VII-VII aus Figur 6,
- Figur 14: den auch in Figuren 8 und 10 gezeigten Ausschnitt der Ventileinheit in der Teilfreigabestellung des Abdeckelementes,
- Figur 15: die bisher beschriebene Ventileinrichtung mit in der Sperrstellung an der Ventileinheit montiertem Abdeckelement in einer perspektivischen Darstellung,
- Figur 16: die Anordnung aus Figur 15 in einer Draufsicht mit Blickrichtung gemäß Pfeil XVI aus Figur 15,
- Figur 17: einen Querschnitt durch die Ventileinrichtung gemäß Figuren 15 und 16 entsprechend Schnittlinie VII-VII aus Figur 6, und
- Figur 18: einen der Figur 14 entsprechenden Ausschnitt der ventileinheit gemäß Figuren 15 und 16, wobei das Abdeckelement bei Einnahme seiner Sperrstellung gezeigt ist.

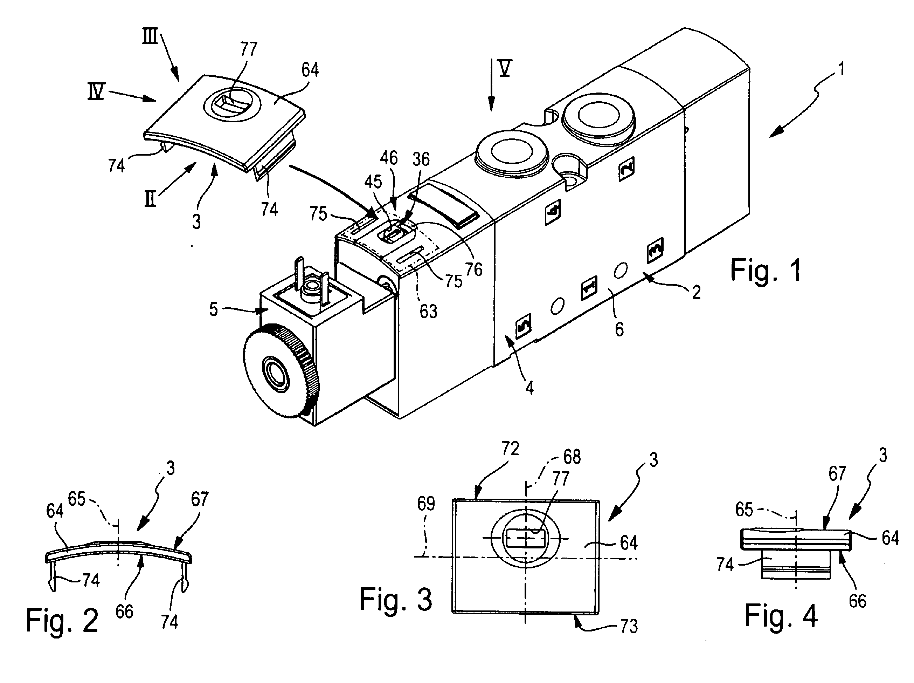

Aus der Zeichnung ist eine insgesamt mit Bezugsziffer 1 bezeichnete Ventileinrichtung ersichtlich, die sich aus einer Ventileinheit 2 und einem Abdeckelement 3 zusammensetzt. Das Abdeckelement 3 ist in Figuren 2 bis 4 auch nochmals einzeln aus verschiedenen Blickwinkeln dargestellt.

Die Ventileinheit 2 ist von elektrisch betätigbarer Bauart und ist insbesondere als elektrofluidisch vorgesteuertes Mehrwegeventil ausgebildet. Sie setzt sich insbesondere aus einem durch Fluidkraft betätigbaren Hauptventil 4 und mindestens einem mit dem Hauptventil 4 zu einer Baugruppe zusammengefassten, elektrisch betätigbaren Vorsteuerventil 5 zusammen.

Die Ventileinheit 2 weist ein Ventilgehäuse 6 auf, das in der Regel mehrteilig aufgebaut ist, wobei insbesondere vorgesehen sein kann, dass das Hauptventil 4 und das Vorsteuerventil 5 über eigene, insbesondere lösbar aneinandergesetzte Gehäusekomponenten verfügen.

Das Hauptventil 4 enthält mindestens ein im Innern des Ventilgehäuses 6 zwischen verschiedenen Schaltstellungen umschaltbar angeordnetes Hauptventilglied 7. Das Hauptventilglied 7 ist vorzugsweise als Ventilschieber ausgebildet. Je nach Schaltstellung kann das Hauptventilglied 7 verschiedene Hauptventilkanäle 8 in unterschiedlichen Mustern miteinander verbinden und voneinander trennen, um gewisse Fluidströmungen zuzulassen oder zu unterbinden.

Exemplarisch bildet das Hauptventil 4 ein 5/2-Wegeventil. Hierbei ist einer der Hauptventilkanäle 8 als mit einer externen Druckquelle verbindbarer Speisekanal 8a ausgebildet, zwei weitere Hauptventilkanäle 8 stellen mit einem anzusteuernden Verbraucher verbindbare Arbeitskanäle 8b, 8c dar, und die verbleibenden zwei Ventilkanäle 8 fungieren als mit einer Drucksenke, beispielsweise mit der Atmosphäre, verbindbare Entlastungskanäle 8d, 8e.

Das Hauptventilglied 7 ist mit Dichtelementen 12 bestückt, die durch Zusammenwirken mit gehäuseseitigen Dichtflächen die gewünschten Fluidwege freigeben oder verschließen. Das Hauptventilglied 7 kann insbesondere in zwei Schaltstellungen positioniert werden, in denen der Speisekanal 8a die beiden Arbeitskanäle 8b, 8c wechselweise mit entweder dem Speisekanal 8a oder einem der Entlastungskanäle 8d, 8e verbindet.

Das Hauptventilglied 7 ist durch Federmittel 13 in eine ersten Schaltstellung vorgespannt, aus der es unter Überwindung der von den Federmitteln 13 generierten Federkraft in eine zweite Schaltstellung umschaltbar ist, indem eine mit ihm wirkverbundene Antriebsfläche 14 mit einem Antriebsfluid beaufschlagt wird.

Die Fluidbeaufschlagung der Antriebsfläche 14 wird durch das Vorsteuerventil 5 gesteuert. Dieses enthält eine elektrische Antriebseinrichtung 15, die exemplarisch als Elektromagneteinrichtung ausgebildet ist, so dass das Vorsteuerventil 5 ein Magnetventil ist. Allerdings lässt sich die Erfindung auch mit anderen elektrisch betätigbaren Ventilarten realisieren, beispielsweise mit Piezoventilen.

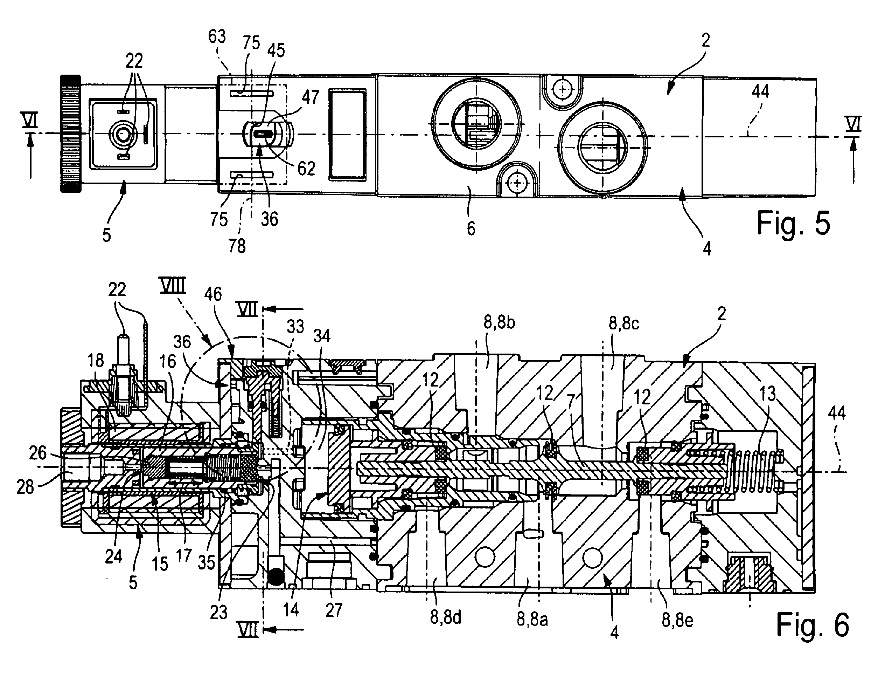

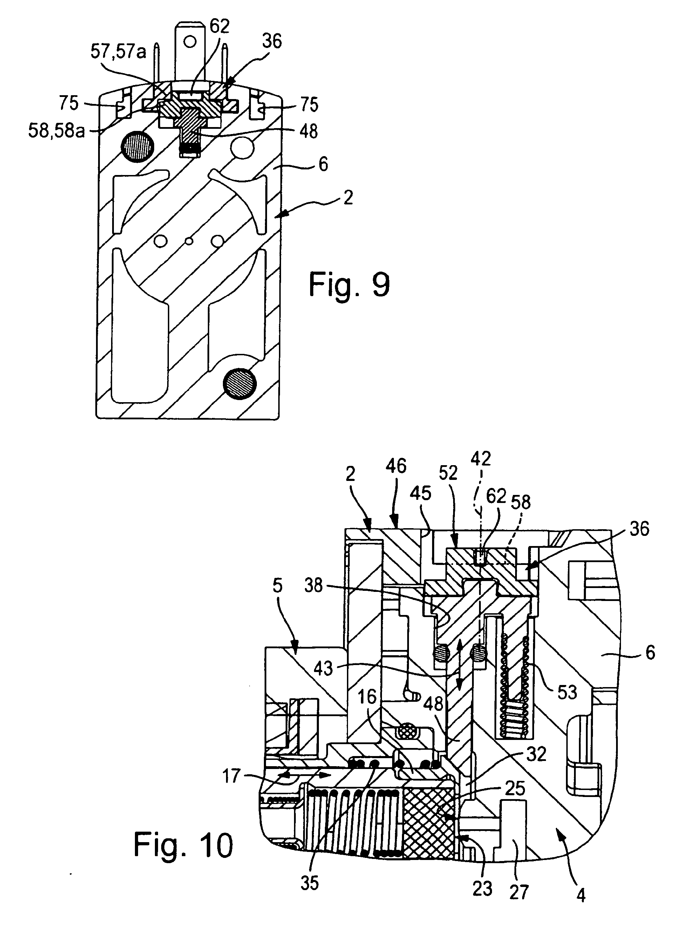

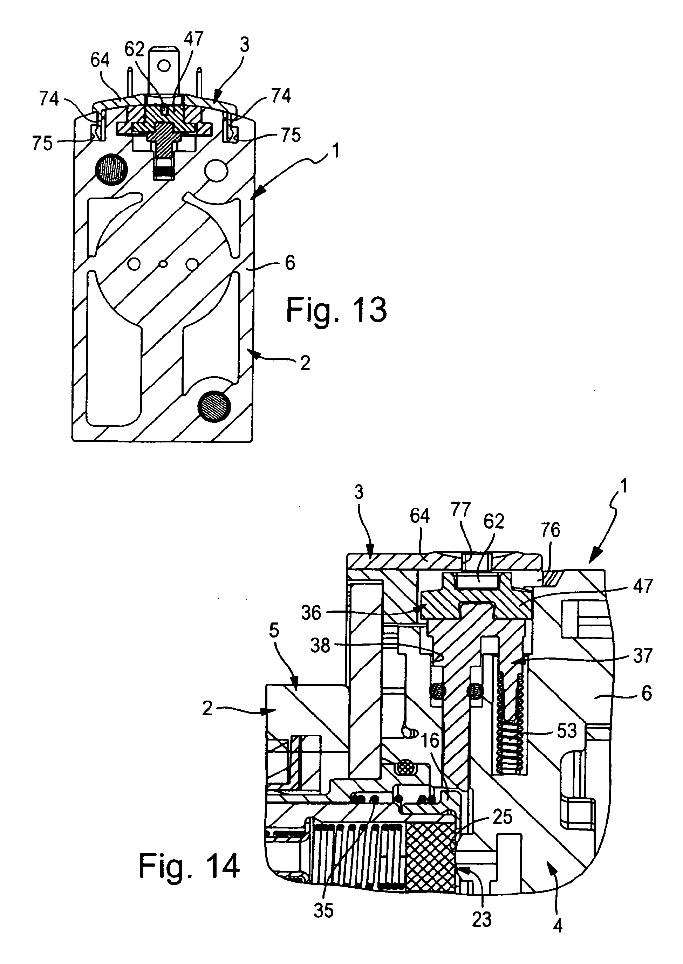

Die elektrische Antriebseinrichtung 15 kann derart elektrisch angesteuert werden, dass ein Vorsteuerventilglied 16 unter Ausführung einer linearen Umschaltbewegung 17 zwischen einer aus Figuren 6, 8, 14 und 18 ersichtlichen ersten Schaltstellung und einer diesbezüglich axial versetzten, in Figur 10 angedeuteten zweiten Schaltstellung verlagert wird. Das Vorsteuerventilglied 16 ist beim Ausführungsbeispiel ein integraler Bestandteil eines beweglichen Magnetankers der Antriebseinrichtung 15, der durch elektrisches Erregen einer Spuleneinrichtung 18 der elektrischen Antriebseinrichtung 15 verstellbar ist. Die hierfür erforderlichen elektrischen Betätigungssignale können über eine elektrische Schnittstelleneinrichtung 22 eingespeist werden.

Anstatt als Baueinheit, könnten das Vorsteuerventilglied 16 und ein zugeordneter Magnetanker auch als gesonderte Teile ausgeführt sein, die auf beliebige Weise antriebsmäßig miteinander kooperieren.

Das Vorsteuerventilglied 16 ist zweckmäßigerweise stößelartig ausgebildet und verfügt an seinen beiden Stirnseiten über eine erste bzw. zweite Dichtfläche 23, 24. Die erste Dichtfläche 23 liegt einem im Innern des Ventilgehäuses 6 ausgebildeten ersten Ventilsitz 25 gegenüber, der die Mündung eines im Ventilgehäuse 6 verlaufenden Vorsteuerspeisekanals 27 umrahmt, der mit dem zur Fluidbeaufschlagung der Antriebsfläche 14 vorgesehenen Antriebsmedium gespeist ist. Exemplarisch zweigt der Vorsteuerspeisekanal 27 hierzu im Innern des Ventilgehäuses 6 von dem Speisekanal 8a ab. Das Antriebsmedium kann allerdings auch separat eingespeist werden.

Der zweiten Dichtfläche 24 liegt ein bevorzugt an der Antriebseinrichtung 15 ausgebildeter Ventilsitz 26 gegenüber, der die Kanalmündung eines andernends zur Atmosphäre ausmündet Vorsteuerentlüftungskanals 28 umrahmt.

Der erste Ventilsitz 25 liegt in einer im Innern des Ventilgehäuses 6 ausgebildeten Ventilkammer 32, die über einen nur gestrichelt und nur in Figur 6 angedeuteten Vorsteuerarbeitskanal 33 in ständiger Verbindung mit einer Antriebskammer 34 des Hauptventilglieds 7 steht, die unter anderem von der beweglichen Antriebsfläche 14 des Hauptventilgliedes 7 begrenzt ist.

Befindet sich das Vorsteuerventilglied 16 in der ersten Schaltstellung, trennt es den Vorsteuerspeisekanal 27 von der Ventilkammer 32 ab und verbindet gleichzeitig den Vorsteuerarbeitskanal 33 mit dem zur Atmosphäre führenden Vorsteuerentlüftungskanal 28. Die Antriebskammer 34 ist somit drucklos, so dass auf die Antriebsfläche 14 keine Stellkraft wirkt und das Hauptventilglied 7 durch die Federmittel 13 in seiner ersten Schaltstellung gehalten wird.

In der durch Ausführen der Umschaltbewegung 17 erhältlichen zweiten Schaltstellung des Vorsteuerventilgliedes 16 ist die erste Dichtfläche 23 vom ersten Ventilsitz 25 abgehoben (Figur 10), während gleichzeitig die zweite Dichtfläche 24 an dem zweiten Ventilsitz 26 dichtend anliegt. Dadurch ist durch die Ventilkammer 32 hindurch eine Fluidverbindung zwischen dem Vorsteuerspeisekanal 27 und dem Vorsteuerarbeitskanal 33 hergestellt, so dass die Antriebskammer 34 mit dem insbesondere von Druckluft gebildeten Antriebsmedium gespeist wird und auf die Antriebsfläche 14 eine fluidische Stellkraft wirkt, die das Hauptventilglied 7 unter Überwindung der Federmittel 13 in seine erste Schaltstellung verlagert.

Im elektrisch deaktivierten Zustand der elektrischen Antriebseinrichtung 15 liegt die erste Schaltstellung des Vorsteuerventilgliedes 16 vor, die durch eine das Vorsteuerventilglied 16 ständig beaufschlagende Federeinrichtung 35 aufrechterhalten wird. Zum Umschalten in die zweite Schaltstellung des Vorsteuerventilgliedes 16 ist folglich die rückstellende Kraft der Federeinrichtung 35 zu überwinden.

Die Ventileinheit 2 ist mit einer Handhilfsbetätigungseinrichtung 36 ausgestattet. Sie ermöglicht es, das Vorsteuerventilglied 16 ohne Mitwirkung der elektrischen Antriebseinrichtung 15 durch eine rein manuell aufzubringende Betätigungskraft aus der ersten Schaltstellung in die zweite Schaltstellung zu verlagern und dort solange wie gewünscht zu halten. Die Handhilfsbetätigungseinrichtung 36 wird vor allem zu Einrichtungszwecken genutzt, wenn durch manuelle Betätigung ausgewählte Betriebsvorgänge an einer zugeordneten Maschine oder Anlage ausgelöst werden sollen.

Die Handhilfsbetätigungseinrichtung 36 enthält einen Betätigungsstößel 37, der in einer im Folgenden als Stößelaufnahme 38 bezeichneten Ausnehmung des Ventilgehäuses 6 in Achsrichtung seiner Längsachse 42 verschiebbar aufgenommen ist. Die mögliche Verschiebebewegung des Betätigungsstößels 37 sei im Folgenden als Umschaltbewegung 43 bezeichnet und ist in der Zeichnung durch einen Doppelpfeil illustriert.

Die Stößelaufnahme 38 erstreckt sich bevorzugt quer und insbesondere rechtwinkelig zu einer Längsachse 44 der Ventileinheit 12, wobei diese Längsachse 44 zweckmäßigerweise mit der möglichen Verschieberichtung des Hauptventilgliedes 7 zusammenfällt. Insbesondere erstreckt sich die Längsachse 42 rechtwinkelig zur Umschaltbewegung 17 des Vorsteuerventilgliedes 16. Die Stößelaufnahme 38 fungiert mit ihrer Wandung als Führungsmittel zur Führung des Betätigungsstößels 37 während seiner Umschaltbewegung 43.

Die Stößelaufnahme 38 mündet über eine im Folgenden als Au-βenöffnung 45 bezeichnete Öffnung zu einer Außenfläche 46 des Ventilgehäuses 6 aus.

Exemplarisch ist der Betätigungsstößel 37 zweiteilig ausgebildet. Er verfügt über einen im Bereich der Außenöffnung 45 angeordneten äußeren Teil, der als Betätigungsendabschnitt 47 bezeichnet sei. Außerdem enthält er einen sich bezogen auf die Längsachse 42 axial innen an den Betätigungsendabschnitt 47 anschließenden, im Folgenden als Arbeitsabschnitt 48 bezeichneten zweiten Teil. Diese beiden Teile 47, 48 könnten prinzipiell auch als ein einziges Teil ausgeführt sein.

Der Betätigungsendabschnitt 47 ist für manuelle Beaufschlagung ausgelegt. Er ist aufgrund der Außenöffnung 45 von au-βerhalb der Ventileinheit 2 her zugänglich und kann an seiner äußeren Stirnfläche 52 drückend mit einer Betätigungskraft FB beaufschlagt werden. Eine solche Beaufschlagung erfolgt manuell, gegebenenfalls mit Hilfe eines nicht weiter abgebildeten und beispielsweise von einem Schrauberdreher gebildeten Betätigungswerkzeuges.

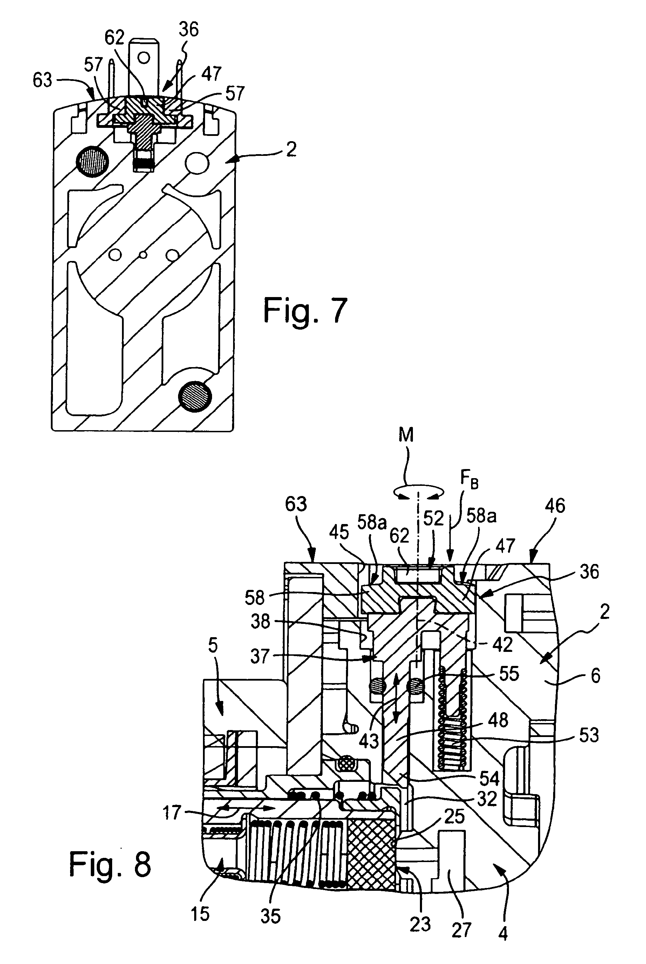

Durch eine Rückstellfedereinrichtung 53 ist der Betätigungsstößel 37 in eine aus Figuren 8, 14 und 18 ersichtliche Grundstellung vorgespannt. In dieser Grundstellung nimmt er innerhalb der Stößelaufnahme 38 seine maximal axial nach au-βen in Richtung zur Außenöffnung 45 verschobene Position ein. Die Grundstellung ist bezüglich dem Ventilgehäuse 6 durch Anschlagmittel vorgegeben, die in der Zeichnung nicht ersichtlich sind, weil sie außerhalb der Schnittebenen liegen.

Die Stößelaufnahme 38 mündet an ihrem der Außenöffnung 45 entgegengesetzten inneren Endbereich in die Ventilkammer 32. Der Arbeitsabschnitt 48 kann auf dieses Weise mit einem dem Betätigungsendabschnitt 47 entgegengesetzten inneren Endabschnitt 54 in die Ventilkammer 32 hineinragend. Ein den Betätigungsstößel 37 umschließender Dichtungsring 55, der an der Wandung der Stößelaufnahme 38 anliegt, verhindert einen Fluidaustritt aus der Ventilkammer 32 durch die Stößelaufnahme 38 hindurch.

Ausgehend von der aus Figuren 8, 14 und 18 ersichtlichen Grundstellung kann der Betätigungsstößel 37 unter Überwindung der rückstellenden Kraft der Rückstellfedereinrichtung 53 in eine axial tiefer in der Stößelaufnahme 38 angeordnete Arbeitsstellung verschoben werden, die in Figur 10 illustriert ist. Die hierzu notwendige Betätigungskraft FB wird auf die axial nach außen orientierte äußere Stirnfläche 52 des Betätigungsendabschnittes 47 manuell aufgebracht. Das manuelle Aufbringen erfolgt entweder direkt mit einem Finger einer Hand oder indirekt unter Zwischenschaltung eines geeigneten Kraftübertragungswerkzeuges, beispielsweise eines Schraubendrehers.

Beim Verschieben in die Arbeitsstellung drückt der Betätigungsstößel 37 mit seinem inneren Endabschnitt 54 gegen den dem ersten Ventilsitz 25 zugewandten vorderen Endabschnitt 56 des Vorsteuerventilgliedes 16. Dadurch wird das Vorsteuerventilglied 16 aus der bis dahin eingenommenen ersten Schaltstellung in die zweite Schaltstellung verlagert. Somit lässt sich das Vorsteuerventilglied 16 rein manuell und mechanisch und ohne Verwendung elektrisch generierter Kräfte umschalten. Solange die Betätigungskraft FB anliegt, bleibt die Arbeitsstellung erhalten. Wird die Betätigungskraft FB wieder weggenommen, schiebt die Rückstellfedereinrichtung 53 den Betätigungsstößel 37 wieder nach außen in die Grundstellung, so dass auch das Vorsteuerventilglied 16 aufgrund der ihm zugeordneten Federeinrichtung 35 wieder in die erste Schaltstellung zurückkehrt.

Die bisher geschilderte Betätigungsart des Betätigungsstößels 37 kann als Tastbetätigung bezeichnet werden. Hier erfolgt das Umschalten des Betätigungsstößels 37 im Rahmen einer tastenden Betätigung durch drückende Beaufschlagung des Betätigungsendabschnittes 47. Die Arbeitsstellung liegt nur so lange vor, wie die Betätigungskraft F_{B} manuell auf den Betätigungsendabschnitt 47 einwirkt.

Die Handhilfsbetätigungseinrichtung 36 ist jedoch darüber hinaus auch so ausgelegt, dass der Betätigungsstößel 37 in seiner Arbeitsstellung bei Bedarf mechanisch verriegelbar ist, so dass er auch bei Wegnahme der manuell aufgebrachten Betätigungskraft FB in der Arbeitsstellung verbleibt. Dadurch kann das Vorsteuerventilglied 16 für beliebig lange Zeit in der zweiten Schaltstellung gehalten werden.

Verantwortlich für die Verriegelungsmöglichkeit sind einerseits am Ventilgehäuse 6 und andererseits an dem Betätigungsendabschnitt 47 angeordnete und miteinander kooperierende erste und zweite Drehverriegelungsmittel 57, 58. Exemplarisch sind die ersten Drehverriegelungsmittel 57 von einer Abstufung der Wandung der Stößelaufnahme 38 axial innerhalb der Außenöffnung 45 gebildet. Die zweiten Drehverriegelungsmittel 58 bestehen aus beispielsweise zwei an dem Betätigungsendabschnitt 47 angeordneten Vorsprüngen, die über axial ansteigende Rampenflächen 58a verfügen.

Der Betätigungsendabschnitt 47 ist relativ zu dem Arbeitsabschnitt 48 um die Längsachse 42 verdrehbar. Hierzu ist der Betätigungsendabschnitt 47 mit dem Arbeitsabschnitt 48 zweckmäßigerweise in axialer Richtung verrastet, und zwar unter Gewährleistung des geschilderten Drehfreiheitsgrades.

Der Betätigungsendabschnitt 47 kann die beispielsweise in Figuren 1, 5, 7, 8 und 11 bis 18 gezeigte Freigabestellung einnehmen, in der er drehwinkelmäßig so positioniert ist, dass die Drehverriegelungsmittel 57, 58 außer Eingriff miteinander stehen. Dies ermöglicht die weiter oben geschilderte Tastbetätigung.

Darüber hinaus besteht die Möglichkeit, den Betätigungsendabschnitt 47 im in die Arbeitsstellung verlagerten Zustand des Betätigungsstößels 37 relativ zu dem Arbeitsabschnitt 48 zu verdrehen, was zur Folge hat, dass sich die ersten und zweiten Drehverriegelungsmittel 57, 58 quer zur Längsachse 52 hintergreifen. Im konkreten Fall des Ausführungsbeispieles greifen hierbei die Rampenflächen 58a axial innen hinter die Abstufung 57a. Auf diese Weise ist der Betätigungsendabschnitt 47 mit dem Ventilgehäuse 6 derart verriegelt, dass die Rückstellfedereinrichtung 53 selbst bei Wegnahme der Betätigungskraft FB nicht in der Lage ist, den Betätigungsstö-βel 37 in die Grundstellung zurückzuschieben. Erst wenn der Betätigungsendabschnitt 47 aus seiner Verriegelungsstellung wieder zurück in die Freigabestellung verdreht wird, so dass die ersten und zweiten Drehverriegelungsmittel 57, 58 wieder außer Eingriff miteinander stehen, kann der Betätigungsstößel 37 wieder in die Grundstellung zurückkehren.

Das zum Verdrehen des Betätigungsendabschnittes 47 erforderliche Drehmoment M kann wie die Betätigungskraft FB an dem Betätigungsendabschnitt 47 von außen her eingeleitet werden. Hierzu weist der Betätigungsendabschnitt 47 an seiner äußeren Stirnfläche 52 einen vorzugsweise als Querschlitz 62 gestalteten Angriffsabschnitt für ein Betätigungswerkzeug auf, insbesondere für den klingenförmigen Abschnitt eines Schraubendrehers. Selbiger kann in den Querschlitz 62 eingesteckt und sodann, zur Übertragung des Drehmomentes, verdreht werden, wobei der Betätigungsendabschnitt 47 mitgenommen wird.

Wenn der Betätigungsendabschnitt 47 und der Arbeitsabschnitt 48 unverdrehbar und insbesondere einstückig miteinander verbunden sind, geht die Verriegelung und Entriegelung mit einem gesamthaften Verdrehen des Betätigungsstößel 37 einher.

Die bisher hinsichtlich der Handhilfsbetätigungseinrichtung 36 beschriebenen Aktionen sind möglich, solange der Betätigungsendabschnitt 47 im Bereich der Außenöffnung 45 frei zugänglich ist. Dies ist so lange der Fall, wie ein eingangs erwähntes Abdeckelement 3 nicht an einem im Bereich der Au-βenöffnung 45 an der Außenfläche 46 des Ventilgehäuses 6 vorgesehenen Montageplatz 63 montiert ist.

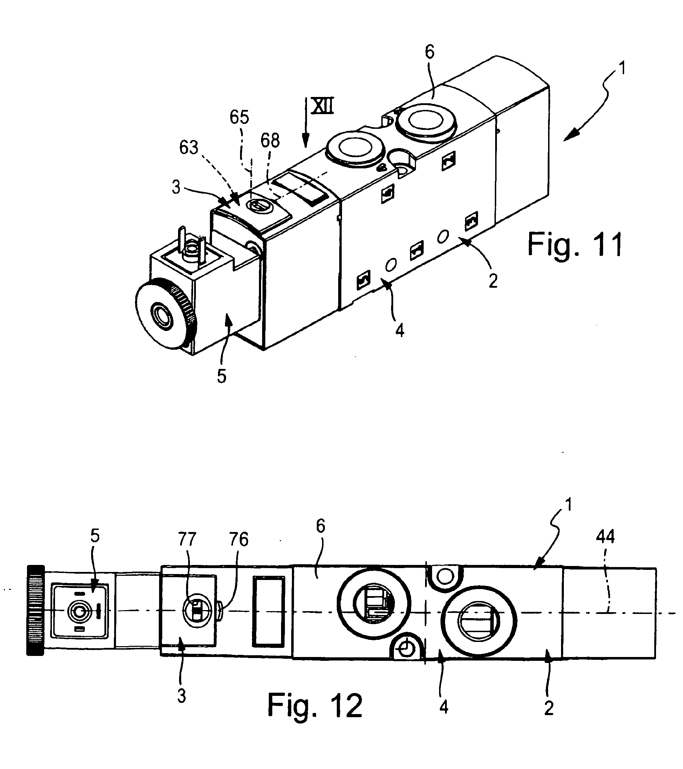

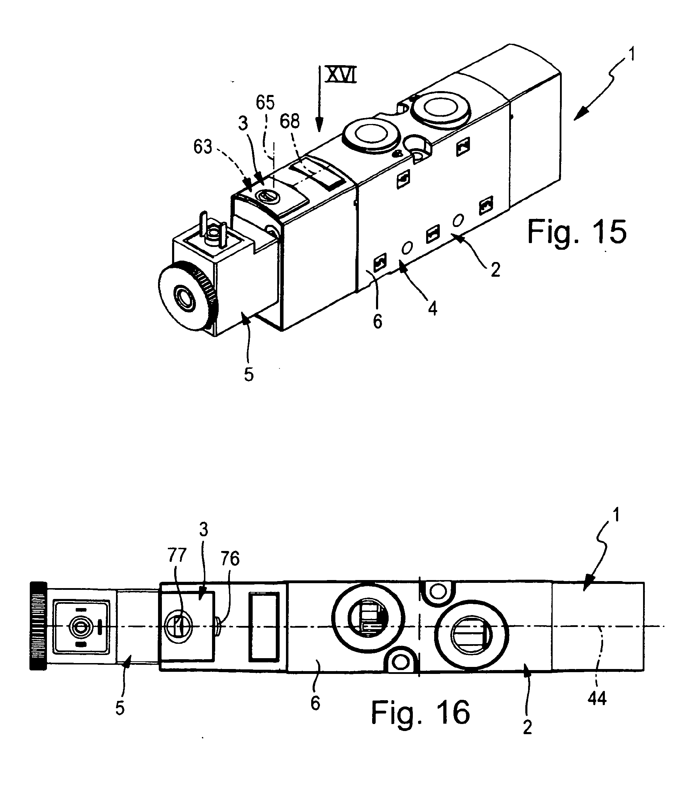

Das Abdeckelement 3 kann relativ zu der Ventileinheit 2 wahlweise in jeder beliebigen von drei Stellungen positioniert werden, bei denen es sich um eine aus Figur 1 ersichtliche Vollfreigabestellung, um eine aus Figuren 11 bis 14 ersichtliche Teilfreigabestellung und um eine aus Figuren 15 bis 18 ersichtliche Sperrstellung handelt. Sowohl bei Einnahme der Teilfreigabestellung als auch bei Einnahme der Sperrstellung ist das Abdeckelement 3 unter Belegung des Montageplatzes 63 am Ventilgehäuse 6 fixiert. Dadurch werden die Betätigungsmöglichkeiten für den Betätigungsendabschnitt 47 entweder - bei Einnahme der Teilfreigabestellung - teilweise eingeschränkt, nämlich auf die Tastbetätigung, oder sie werden - bei Einnahme der Sperrstellung - komplett eingeschränkt, so dass keinerlei Betätigung der Handhilfsbetätigungseinrichtung 36 mehr möglich ist.

In der Vollfreigabestellung ist das zur Ventileinrichtung 1 gehörende Abdeckelement 3 nicht an dem Montageplatz 63 montiert, sondern - wie dies in Figur 1 gut illustriert ist - von der Ventileinheit 2 unter völliger Freilegung des Betätigungsendabschnitts 47 abgenommen. Man erkennt anhand Figuren 1 und 5 bis 8, dass der Betätigungsendabschnitt 47 und insbesondere dessen unter anderem auch den Querschlitz 62 aufweisende äu-βere Stirnfläche 52 bei vom Ventilgehäuse 6 abgenommenem Abdeckelement 3 uneingeschränkt von außen her zugänglich ist, so dass sowohl die Tastbetätigung als auch die Drehbetätigung möglich ist.

Die Figuren 7 und 8 zeigen die Handhilfsbetätigungseinrichtung 38 im unbetätigten Zustand bei durch das Abdeckelement 3 eingenommener Vollfreigabestellung, wobei das vom Montageplatz 63 abgenommene Abdeckelement 3 nicht abgebildet ist. Die Figuren 9 und 10 zeigen die Handhilfsbetätigungseinrichtung 36 im verriegelten Zustand der Arbeitsstellung.

Die Figuren 11 bis 14 zeigen einen Zustand, bei dem das Abdeckelement 3 unter Einnahme der Teilfreigabestellung derart an dem Montageplatz 63 des Ventilgehäuses 6 angeordnet und fixiert ist, dass es den Betätigungsendabschnitt 47 unter Ermöglichung der Tastbetätigung und bei gleichzeitiger Verhinderung einer Drehbetätigung nach außen hin abschirmt.

Die Figuren 15 bis 18 zeigen das Abdeckelement 3 unter Einnahme der am Montageplatz 63 montierten Sperrstellung, in der der Betätigungsendabschnitt 47, insbesondere zumindest dessen äußere Stirnfläche 52, vollständig durch das Abdeckelement 3 zur benachbarten Umgebung hin abgedeckt ist, so dass weder ein eine Tastbetätigung noch ein eine Drehbetätigung bezweckender Zugriff auf den Betätigungsendabschnitt 47 möglich ist.

Wie insbesondere aus Figuren 1 bis 4 ersichtlich ist, verfügt das Abdeckelement 3 zweckmäßigerweise über einen bevorzugt plattenförmigen Abdeckabschnitt 64 der im an dem Montageplatz 63 montierten Zustand des Abdeckelements 3 flächig an der Au-βenfläche 46 des Ventilgehäuses 6 anliegen kann. Der Montageplatz 63 befindet sich im Bereich der Außenöffnung 45 der Stößelaufnahme 38, wobei letztere zweckmäßigerweise in vollem Umfang innerhalb des Umrisses des Montageplatzes 63 liegt, dessen Umriss wiederum dem Umriss des Abdeckabschnittes 64 bei montiertem Abdeckelement 3 entspricht.

Wenn die Außenfläche 46 des Ventilgehäuses 6 im Bereich des Montageplatzes 63 konvex gewölbt ist, wie dies beim Ausführungsbeispiel der Fall ist, kann auch der plattenförmige Abdeckabschnitt 64 eine entsprechende Wölbung aufweisen, wie dies anhand Figur 2 ersichtlich ist.

Das Abdeckelement 3 verfügt über eine Hochachse 65, die rechtwinkelig zu der gegebenenfalls gewölbten Ausdehnungsebene des Abdeckabschnittes 64 verläuft. Die Hochachse 65 erstreckt sich also quasi in der Richtung des Normalenvektors des Abdeckabschnittes 64. Der Abdeckabschnitt 64 verfügt über eine in Achsrichtung der Hochachse 65 orientierte Unterseite 66 und eine diesbezüglich entgegengesetzt orientierte Oberseite 67.

Des Weiteren besitzt das Abdeckelement 3 eine zu der Hochachse 65 rechtwinkelige Längsachse 68 und eine zu sowohl der Hochachse 65 als auch der Längsachse 68 rechtwinkelige Querachse 69.

Sowohl bei Einnahme seiner Teilfreigabestellung als auch bei Einnahme seiner Sperrstellung ist das Abdeckelement 3 zweckmäßigerweise in lösbarer weise an dem Ventilgehäuse 6 fixiert. Seine bezüglich dem Ventilgehäuse 6 eingenommene Position ist dabei zweckmäßigerweise stets die gleiche. Der Montageplatz 63 hat in der Teilfreigabestellung die gleiche Position wie in der Sperrstellung. Allerdings nimmt das Abdeckelement 3 in der Teilfreigabestellung eine andere Ausrichtung bezüglich dem Ventilgehäuse 6 ein als in der Sperrstellung. Das Abdeckelement 3 ist zur Einnahme der Teilfreigabestellung und zur Eingabe der Sperrstellung in zwei unterschiedlichen Ausrichtungen an ein und demselben Montageplatz 63 des Ventilgehäuses 6 montierbar.

Das Umrüsten zwischen der Teilfreigabestellung und der Sperrstellung erfolgt dadurch, dass das Abdeckelement 3 vorübergehend vom Ventilgehäuse 6 abgenommen wird. Es wird vom Ventilgehäuse 6 entfernt, in seiner Ausrichtung verändert und dann erneut am Ventilgehäuse 6 befestigt.

Zur Verbringung in die Vollfreigabestellung ist das Abdeckelement 3 vollständig von dem Ventilgehäuse abnehmbar und entfernbar. In der Vollfreigabestellung liegt das Abdeckelement 3 zweckmäßigerweise als bezüglich dem Ventilgehäuse 6 vollständig getrenntes, separates Element vor, das gänzlich unabhängig vom ventilgehäuse 6 bzw. von der ventileinheit 2 handhabbar ist.

Vorzugsweise unterscheiden sich die in der Teilfreigabestellung und in der Sperrstellung bezüglich dem Ventilgehäuse 6 eingenommenen Ausrichtungen des Abdeckelementes 3 dadurch, dass das Abdeckelement 3 relativ zu seiner Hochachse 65 um 180° verdreht ist.

Sowohl in der Teilfreigabestellung als auch in der Sperrstellung ist das Abdeckelement 6 insbesondere so bezüglich dem Ventilgehäuse 6 ausgerichtet, dass seine Längsachse 68 mit der Längsachse 44 der Ventileinheit 2 und/oder mit der Richtung der Umschaltbewegung 17 des Vorsteuerventilgliedes 16 zusammenfällt.

Der Abdeckabschnitt 64 hat zwei in Achsrichtung der Längsachse 68 in einander entgegengesetzte Richtungen orientierte erste und zweite Stirnflächen 72, 73. Deren Orientierung wird gerade vertauscht, wenn das Abdeckelement 3 zwischen der Teilfreigabestellung und der Sperrstellung umgesetzt wird.

Zur lösbaren Fixierung des Abdeckelementes 3 am Ventilgehäuse 6 ist zweckmäßigerweise eine Rastverbindungseinrichtung vorgesehen. Diese setzt sich vorzugsweise aus mehreren zum Abdeckelement 3 gehörenden Rastvorsprüngen 74 und mehreren am Ventilgehäuse 6 im Bereich des Montageplatzes 63 angeordneten Rastvertiefungen 75 zusammen.

Exemplarisch verfügt das Abdeckelement 3 über zwei an seiner Unterseite 66 nach unten wegragende und in Achsrichtung der Querachse 69 mit Abstand zueinander angeordnete Rastvorsprünge 74. Hierzu komplementäre Rastvertiefungen 75 sind an einander diametral entgegengesetzten Seiten der Stößelaufnahme 68 im Ventilgehäuse 6 ausgebildet und zu der Außenfläche hin offen. Die Rastvertiefungen 75 sind insbesondere nutförmig gestaltet und erstrecken sich parallel zu der Längsachse 44, wobei sie einen hinterschnittenen Querschnitt haben, was man insbesondere aus Figuren 9, 13 und 17 ersehen kann. Die Rastvorsprünge 74 haben insbesondere eine leistenförmige Gestalt mit einer länglichen Erstreckung in Achsrichtung der Längsachse 68, wobei sie eine an den hinterschnittenen Querschnitt der Rastvertiefungen 75 angepasste abgestufte Außenkontur besitzen.

Zur Montage am Montageplatz 63 wird das Abdeckelement 3 mit seinen Rastvorsprüngen 74 voraus in der gewünschten Ausrichtung so an das Ventilgehäuse 6 angesetzt, dass die Rastvorsprünge 74 in die Rastvertiefungen 75 eintauchen. Sodann wird das Abdeckelement 3 an die Außenfläche 46 des Ventilgehäuses 6 angedrückt, bis die Rastvorsprünge 74 in die Rastvertiefungen 75 eingerastet sind. Damit ist das Abdeckelement 3 sicher fixiert.

Allerdings sind die Rastvorsprünge 74 an ihren die interne Abstufung der Rastvertiefungen 75 hintergreifenden Abschnitten leicht abgeschrägt, so dass die Rastverbindung lösbar ist, indem auf das Abdeckelement 3 eine von dem Montageplatz weggerichtete Zugkraft ausgeübt wird. Die biegeelastischen Rastvorsprünge 74 können dann vorübergehend elastisch abbiegen und aus den Rastvertiefungen 75 heraustreten.

Um diese Abnehmen des Abdeckelementes 3 vom Ventilgehäuse 3 zu erleichtern, ist das Ventilgehäuse 6 am Randbereich des Montageplatzes 63 zweckmäßigerweise mit einer Demontageausnehmung 76 versehen, die im montierten Zustand des Abdeckelementes 3 von dem Abdeckabschnitt 64 teilweise überdeckt ist. Ein Teil des Querschnittes der Demontageausnehmung 76 liegt somit bei montiertem Abdeckelement 3 außerhalb des Umrisses des Abdeckabschnittes 64, während ein weiterer Abschnitt der Demontageausnehmung 76 unter dem Abdeckabschnitt 64 liegt.

Somit besteht die Möglichkeit, ein Hebelwerkzeug, beispielsweise einen Schraubendreher, schräg von außen her in die Demontageausnehmung 76 einzuführen und unter den Abdeckabschnitt 64 zu schieben, um anschließend durch Verschwenken relativ zum Ventilgehäuse 6 das Abdeckelement 3 vom Ventilgehäuse 6 abzuhebeln.

Die Rastvorsprünge 74 und Rastvertiefungen 75 sind insbesondere so ausgebildet und angeordnet, dass unabhängig davon, ob das Abdeckelement 3 nun in der Teilfreigabestellung oder in der Sperrstellung angeordnet ist, stets die gleichen Rastvorsprünge 74 und Rastvertiefungen 75 aktiv sind. Es erfolgt lediglich eine Vertauschung der Zuordnung zwischen den Rastvorsprüngen 74 und den Rastvertiefungen 75.

In diesem Zusammenhang ist es von Vorteil, wenn das Abdeckelement 3 bezüglich seiner Rastvorsprünge 74 in Achsrichtung der Längsachse 68 über symmetrische Abmessungsverhältnisse verfügt. Die beiden Stirnflächen 72, 73 liegen somit unabhängig davon, ob die Teilfreigabestellung oder die Sperrstellung vorliegt, an der gleichen Stelle der Außenfläche 46 des Ventilgehäuses 6 und sind lediglich vertauscht zueinander angeordnet.

Das Abdeckelement 3 weist in seinem Abdeckabschnitt 64 zweckmäßigerweise eine als Betätigungsdurchbrechung 77 bezeichnet Durchbrechung auf, die in der Teilfreigabestellung des Abdeckelementes 3 die Tastbetätigung des Betätigungsendabschnittes 47 ermöglicht, aufgrund ihrer besonderen Querschnittsform jedoch eine Drehbetätigung des Betätigungsendabschnittes 47 verhindert.

Wie aus Figur 3 ersichtlich ist, ist die Betätigungsdurchbrechung 77 außerhalb der Längsmitte des Abdeckabschnittes 64 angeordnet. Die Beätigungsdurchbrechung 77 liegt insbesondere zur Gänze zwischen der längsmittig verlaufenden Querachse 69 und der einen, in Achsrichtung der Längsachse 68 orientierten Stirnfläche 72 des Abdeckabschnittes 64.

Wie man der Figur 5 gut entnehmen kann, ist auch der Betätigungsendabschnitt 47 in Achsrichtung der Längsachse 44 versetzt neben einer Querachse 78 des Montageplatzes 63 angeordnet, die in der Längsmitte des Montageplatzes 63 verläuft.

Auf der der Betätigungsdurchbrechung 77 entgegengesetzten Seite der Querachse 69 ist der Abdeckabschnitt 64 vollständig geschlossen.

In der Teilfreigabestellung ist das Abdeckelement 3 derart ausgerichtet am Montageplatz 63 montiert, dass die Betätigungsdurchbrechung 77 in der Achsrichtung der Längsachse 42 über dem Betätigungsendabschnitt 47 liegt. Es liegt dann also eine fluchtende Zuordnung zwischen der Betätigungsdurchbrechung 77 und der äußeren Stirnfläche 52 des Betätigungsendabschnittes 47 vor.

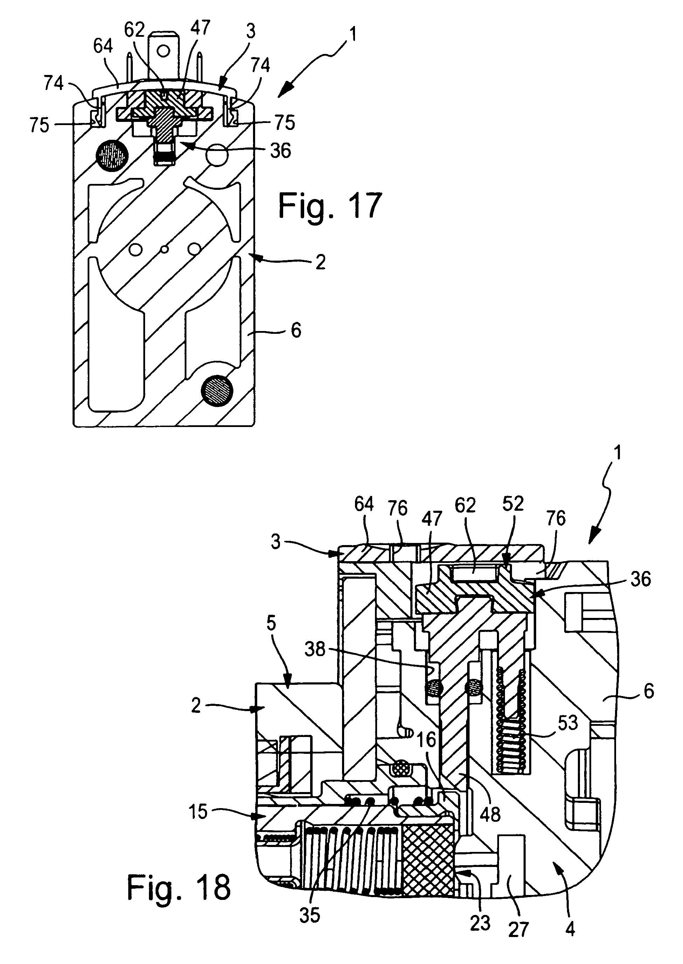

Wenn das Abdeckelement 3 in bezüglicher seiner Hochachse 65 um 180° verdrehter Ausrichtung am Montageplatz 63 montiert wird, befindet sich die Betätigungsdurchbrechung 77 gemäß Figur 18 in einem neben dem Betätigungsendabschnitt 47 liegenden Bereich, wobei nun der undurchbrochene Abschnitt des Abdeckabschnittes 64 den Betätigungsendabschnitt 47 übergreift (Sperrstellung). Der Betätigungsendabschnitt 47 kann nun weder tastend noch drehend betätigt werden.

Die Betätigungsdurchbrechung 77 hat zweckmäßigerweise einen länglichen Querschnitt und ist insbesondere als Langloch gestaltet. Dieses Langloch ist ausreichend lang und breit, um beispielsweise den klingenförmigen Abschnitt eines Betätigungswerkzeuges, insbesondere die Schraubklinge eines Schraubendrehers, hindurchzuführen und zur Tastbetätigung drückend auf die darunterliegende äußere Stirnfläche 52 des Betätigungsendabschnittes 47 einzuwirken.

Andererseits ist die langlochförmige Betätigungsdurchbrechung 77 so schmal ausgebildet, dass ein hindurchgesteckter klingenförmiger Abschnitt eines Betätigungswerkzeuges nicht verdreht werden kann, weil er bei einem versuchten Drehvorgang an den Längsrändern der Betätigungsdurchbrechung 77 anstößt. Eine Drehbetätigung ist mithin nicht möglich.

Vorteilhafterweise erfolgt eine dahingehend aufeinander abgestimmte Anordnung des Querschlitzes 62 und der im Querschnitt länglichen Betätigüngsdurchbrechung 77, das sich der Querschlitz 62 und die Betätigungsdurchbrechung 77 überkreuzen, wenn das Abdeckelement 3 bei in Grundstellung befindlichem Betätigungsstößel 37 in der Teilfreigabestellung montiert ist. Auf diese Weise kann der klingenförmige Abschnitt des Betätigungswerkzeuges zwar in die Betätigungsdurchbrechung 77 eingesteckt, nicht jedoch in den Querschlitz 62 eingeführt werden. Das Betätigungswerkzeug kann somit nicht in einer ein Drehmoment übertragenden Weise mit dem Betätigungsendabschnitt 47 in Eingriff gebracht werden.

## Patentansprüche

1. Ventileinrichtung, mit einer ein Ventilgehäuse (6) aufweisenden, elektrisch betätigbaren Ventileinheit (2), die zur manuellen Betätigung mit einer Handhilfsbetätigungseinrichtung (36) ausgestattet ist, die einen beweglich in dem Ventilgehäuse (6) angeordneten Betätigungsstößel (37) aufweist, der über einen von außerhalb des Ventilgehäuses (6) zugänglichen Betätigungsendabschnitt (47) verfügt und der zum einen im Rahmen einer Tastbetätigung durch drückende Beaufschlagung des Betätigungsendabschnittes (47) zwischen einer unbetätigten Grundstellung und einer betätigten Arbeitsstellung verschiebbar ist und zum anderen im Rahmen einer Drehbetätigung durch Verdrehen des Betätigungsendabschnittes (47) in der Arbeitsstellung lösbar verriegelbar ist, und mit einem Abdeckelement (3), das relativ zu dem Ventilgehäuse (6) in mehreren unterschiedlichen Stellungen positionierbar ist, um die Zugänglichkeit des Betätigungsendabschnittes (47) zu beeinflussen, wobei eine dieser Stellungen eine Teilfreigabestellung ist, in der das Abdeckelement (3) derart an dem Ventilgehäuse (6) fixiert ist, dass es den Betätigungsendabschnitt (47) unter Ermöglichung der Tastbetätigung gegen einen die Drehbetätigung bezweckenden Zugriff abschirmt, **dadurch gekennzeichnet, dass** eine weitere der möglichen Stellungen des Abdeckelementes (3) eine Sperrstellung ist, in der das Abdeckelement (3) derart an dem Ventilgehäuse (6) fixiert ist, dass es den Betätigungsendabschnitt (47) sowohl gegen einen die Drehbetätigung bezweckenden Zugriff als auch gegen einen die Tastbetätigung bezweckenden Zugriff abschirmt.

2. Ventileinrichtung nach Anspruch 1, **dadurch gekennzeichnet, dass** eine weitere der möglichen Stellungen des Abdeckelementes (3) eine Vollfreigabestellung ist, in der der Betätigungsendabschnitt (47) sowohl für die Tastbetätigung als auch für die Drehbetätigung zugänglich ist.

3. Ventileinrichtung nach Anspruch 2, **dadurch gekennzeichnet, dass** das Abdeckelement (3) bei Einnahme seiner Teilfreigabestellung und seiner Sperrstellung in lösbarer weise an dem Ventilgehäuse (6) fixiert ist und zur Verbringung in die Vollfreigabestellung von dem Ventilgehäuse (6) abnehmbar ist, wobei es in der Vollfreigabestellung zweckmäßigerweise als von dem ventilgehäuse (6) vollständig getrenntes, separates Element vorliegt.

4. Ventileinrichtung nach einem der Ansprüche 1 bis 3, **dadurch gekennzeichnet, dass** das Abdeckelement (3) in der Teilfreigabestellung und in der Sperrstellung jeweils derart lösbar an dem Ventilgehäuse (6) fixiert ist, dass es zum Wechseln zwischen diesen Stellungen vorübergehend von dem Ventilgehäuse (6) abnehmbar ist.

5. Ventileinrichtung nach einem der Ansprüche 1 bis 4, **dadurch gekennzeichnet, dass** außen an dem Ventilgehäuse (6) im Bereich des Betätigungsendabschnittes (47) ein Montageplatz (63) für das Abdeckelement (3) vorhanden ist, an dem das Abdeckelement (3) bei Einnahme seiner Teilfreigabestellung und bei Einnahme seiner Sperrstellung lösbar montiert ist.

6. Ventileinrichtung nach Anspruch 5, **dadurch gekennzeichnet, dass** das Abdeckelement (3) an dem Montageplatz (63) in zwei unterschiedlichen Ausrichtungen montierbar ist, wobei es bei der einen Ausrichtung die Teilfreigabestellung und bei der anderen Ausrichtung die Sperrstellung einnimmt.

7. Ventileinrichtung nach Anspruch 6, **dadurch gekennzeichnet, dass** das Abdeckelement (3) eine Hochachse (65) aufweist und sowohl in der Teilfreigabestellung als auch in der Sperrstellung mit zu dem Montageplatz (63) senkrechter Hochachse (65) am Ventilgehäuse (6) angeordnet ist, wobei es in diesen beiden Stellungen um 180° bezüglich der Hochachse (65) verdrehte Ausrichtungen einnimmt.

8. Ventileinrichtung nach einem der Ansprüche 1 bis 7, **dadurch gekennzeichnet, dass** das Abdeckelement (3) in der Teilfreigabestellung und in der Sperrstellung jeweils lösbar mit dem Ventilgehäuse (6) verrastet ist.

9. Ventileinrichtung nach Anspruch 8, **dadurch gekennzeichnet, dass** das Ventilgehäuse (6) eine bei montiertem Abdeckelement (3) dem Randbereich des Abdeckelementes (3) zugeordnete und teilweise von dem Abdeckelement (3) überdeckte Demontageausnehmung (76) aufweist, die das Ansetzen eines Hebelwerkzeuges zum Demontieren des Abdeckelementes (3) ermöglicht.

10. Ventileinrichtung nach Anspruch 8 oder 9, **dadurch gekennzeichnet, dass** das Abdeckelement einen zweckmäßigerweise plattenförmigen Abdeckabschnitt (64) und mehrere von dem Abdeckabschnitt (64) wegragende Rastvorsprünge (74) aufweist, wobei das Ventilgehäuse (6) über mehrere Rastvertiefungen (75) verfügt, in die das Abdeckelement (3) bei Einnahme der Teilfreigabestellung und der Sperrstellung lösbar verrastet eingreift, wobei zweckmäßigerweise sowohl in der Teilfreigabestellung als auch in der Sperrstellung stets die gleichen Rastvertiefungen (75) mit einem Rastvorsprung (74) zusammenwirken.

11. Ventileinrichtung nach einem der Ansprüche 1 bis 10 **dadurch gekennzeichnet, dass** das Abdeckelement (3) einen zweckmäßigerweise plattenförmigen Abdeckabschnitt (64) aufweist, der den Betätigungsendabschnitt (47) des Betätigungsstößels (37) je nach eingenommener Stellung in einem mehr oder weniger großen Ausmaß abdeckt.

12. Ventileinrichtung nach einem der Ansprüche 1 bis 11, **dadurch gekennzeichnet, dass** das Abdeckelement (3) den Betätigungsendabschnitt (47) bei Einnahme der Sperrstellung vollständig abdeckt.

13. Ventileinrichtung nach einem der Ansprüche 1 bis 12, **dadurch gekennzeichnet, dass** das Abdeckelement (3) eine Betätigungsdurchbrechung (77) aufweist, die bei Einnahme der Sperrstellung neben dem Betätigungsendabschnitt (47) und bei Einnahme der Teilfreigabestellung über dem Betätigungsendabschnitt (47) liegt und deren Querschnitt so gestaltet ist, dass zum Hervorrufen der Tastbetätigung ein Hindurchführen eines auf den Betätigungsendabschnitt (47) drückenden Betätigungswerkzeug möglich ist, zugleich aber verhindert ist, dass ein zum Verdrehen des Betätigungsendabschnittes (47) geeignetes Betätigungswerkzeug hindurchsteckbar und/oder nach einem Hindurchstecken verdrehbar ist.

14. Ventileinrichtung nach Anspruch 13, **dadurch gekennzeichnet, dass** der Betätigungsendabschnitt (47) stirnseitig einen das Ansetzen eines klingenförmigen Abschnittes eines Betätigungswerkzeuges ermöglichenden Querschlitz (62) aufweist, wobei die Betätigungsdurchbrechung (77) des Abdeckelementes (3) die Form eines Langloches hat und wobei zweckmäßigerweise eine Überkreuzkonfiguration zwischen dem Querschlitz (62) und der Betätigungsdurchbrechung (77) vorliegt, wenn der Betätigungsendabschnitt (47) die Arbeitsstellung und das Abdeckelement (3) die Teilfreigabestellung einnimmt.

15. Ventileinrichtung nach einem der Ansprüche 1 bis 14, **dadurch gekennzeichnet, dass** die Ventileinheit (2) von vorgesteuerter Bauart ist und über ein Hauptventil (4) mit einem Hauptventilglied (7) sowie mindestens ein zur fluidischen Betätigung des Hauptventils (4) dienendes, elektrisch betätigbares Vorsteuerventil (5) verfügt, wobei das Vorsteuerventil (5) ein die Fluidbeaufschlagung des Hauptventilgliedes (7) steuerndes vorsteuerventilglied (16) aufweist, dem die Handhilfsbetätigungseinrichtung (36) zugeordnet ist.

## Claims

1. Valve device comprising an electrically operated valve unit (2) having a valve housing (6), which valve unit (2) is, for manual actuation, fitted with an auxiliary manual actuating device (36) provided with an actuating plunger (37) which is movably installed into the valve housing (6), which has an actuating end section (47) accessible from outside the valve housing (6) and which on the one hand is movable between a non-actuated home position and an actuated operating position by a pressure acting on the actuating end section (47) in the process of a pushbutton operation and on the other hand is releasably lockable in the operating position by turning the actuating end section (47) in the process of a rotary operation, and further comprising a cover element (3) which can be positioned in several different positions relative to the valve housing (6) in order to influence the accessibility of the actuating end section (47), wherein one of these positions is a partial release position in which the cover element (3) is secured to the valve housing (6) in such a way that it shields the actuating end section (47) against an access for rotary operation while allowing pushbutton operation, **characterised in that** a further possible position of the cover element (3) is a blocking position in which the cover element (3) is secured to the valve housing (6) in such a way that it shields the actuating end section (47) both against an access for rotary operation and against an access for pushbutton operation.

2. Valve device according to claim 1, **characterised in that** a further possible position of the cover element (3) is a full release position in which the actuating end section (47) is accessible both for pushbutton operation and for rotary operation.

3. Valve device according to claim 2, **characterised in that** the cover element (3), when adopting its partial release position and its blocking position, is releasably secured to the valve housing (6) and can be removed from the valve housing (6) for transfer into the full release position, being expediently present as an element which is completely separated from the valve housing (6) in the full release position.

4. Valve device according to any of claims 1 to 3, **characterised in that** the cover element (3) is in its partial release position and in its blocking position secured to the valve housing (6) in such a way that it can be removed temporarily from the valve housing (6) for changing between these two positions.

5. Valve device according to any of claims 1 to 4, **characterised in that** on the outside of the valve housing (6) in the region of the actuating end section (47) a mounting location (63) for the cover element (3) is provided, where the cover element (3) is releasably mounted when adopting its partial release position and its blocking position.

6. Valve device according to claim 5, **characterised in that** the cover element (3) can be mounted in the mounting location (63) in two different orientations, adopting the partial release position in one orientation and the blocking position in the other orientation.

7. Valve device according to claim 6, **characterised in that** the cover element (3) has a vertical axis (65) and is mounted on the valve housing (6) with the vertical axis (65) being perpendicular to the mounting location (63) both in the partial release position and in the blocking position.

8. Valve device according to any of claims 1 to 7, **characterised in that** the cover element (3) is releasably latched to the valve housing (6) in the partial release position and in the blocking position.

9. Valve device according to claim 8, **characterised in that** the valve housing (6) has a dismantling recess (76) which in the mounted state of the cover element (3) is assigned to the edge region of the cover element (3) and is partially covered by the cover element (3) and which permits the application of a lever tool for the removal of the cover element (3).

10. Valve device according to claim 8 or 9, **characterised in that** the cover element comprises an expediently plate-shaped cover section (64) and several latching projections (74) projecting from the cover section (64), wherein the valve housing (6) has several latching recesses (75) with which the cover element (3) is in releasably latched engagement when adopting its partial release position and its blocking position, the same latching recesses (75) expediently acting together with a latching projection (74) both in the partial release position and in the blocking position.

11. Valve device according to any of claims 1 to 10, **characterised in that** the cover element (3) has an expediently plate-shaped cover section (64) which covers the actuating end section (47) of the actuating plunger (37) to a greater or lesser degree depending on the adopted position.

12. Valve device according to any of claims 1 to 11, **characterised in that** the cover element (3) covers the actuating end section (47) completely when adopting the blocking position.

13. Valve device according to any of claims 1 to 12, **characterised in that** the cover element (3) has an actuating opening (77) which lies adjacent to the actuating end section (47) in the blocking position and above the actuating end section (47) in the partial release position, and the cross-section of which is designed such that, in order to initiate the pushbutton operation, an operating tool exerting pressure on the actuating end section (47) can be inserted while preventing the insertion and/or the turning after insertion of an operating tool suitable for turning the actuating end section (47).

14. Valve device according to claim 13, **characterised in that** the actuating end section (47) has at its end face a transverse slot (62) allowing the application of a blade-shaped section of an operating tool, wherein the actuating opening (77) of the cover element (3) has the form of a slot and there is expediently a crossover configuration between the transverse slot (62) and the actuating opening (77) if the actuating end section (47) adopts the operating position and the cover element (3) adopts the partial release position.

15. Valve device according to any of claims 1 to 14, **characterised in that** the valve unit (2) is of a pilot-operated design and comprises a main valve (4) with a main valve member (7) and at least one electrically operated pilot valve (5) for the fluidic actuation of the main valve (4), the pilot valve (5) comprising a pilot valve member (16) which controls the application of fluid pressure to the main valve member (7) and to which the auxiliary manual actuating device (36) is assigned.

## Revendications

1. Dispositif de soupape avec une unité de soupape (2) actionnable électriquement, présentant un boîtier de soupape (6), qui est équipée pour l'actionnement manuel d'un dispositif d'actionnement auxiliaire manuel (36) qui présente un coulisseau d'actionnement (37) agencé de manière mobile dans le boîtier de soupape (6), disposant d'une section d'extrémité d'actionnement (47) accessible depuis l'extérieur du boîtier de soupape (6) et mobile d'une part dans le cadre d'un actionnement par pression par sollicitation par pression de la section d'extrémité d'actionnement (47) entre une position de base non actionnée et une position de travail actionné et pouvant être verrouillé d'autre part de manière détachable dans le cadre d'un actionnement rotatif par rotation de la section d'extrémité d'actionnement (47) dans la position de travail, et avec un élément de recouvrement (3) qui peut être positionné par rapport au boîtier de soupape (6) dans plusieurs positions différentes afin d'influencer l'accessibilité de la section d'extrémité d'actionnement (47), l'une de ces positions étant une position de libération partielle, dans laquelle l'élément de recouvrement (3) est fixé sur le boîtier de soupape (6) de telle manière qu'il protège la section d'extrémité d'actionnement (47) en permettant l'actionnement par pression d'un accès visant à l'actionnement rotatif, **caractérisé en ce qu'**une autre des positions possibles de l'élément de recouvrement (3) est une position de blocage, dans laquelle l'élément de recouvrement (3) est fixé sur le boîtier de soupape (6) de telle manière qu'il protège la section d'extrémité d'actionnement (47) non seulement d'un accès visant à l'actionnement rotatif mais aussi d'un accès visant à l'actionnement par pression.

2. Dispositif de soupape selon la revendication 1, **caractérisé en ce qu'**une autre des positions possibles de l'élément de recouvrement (3) est une position de libération complète, dans laquelle la section d'extrémité d'actionnement (47) est accessible non seulement pour l'actionnement par pression mais aussi pour l'actionnement rotatif.

3. Dispositif de soupape selon la revendication 2, **caractérisé en ce que** l'élément de recouvrement (3) est fixé lors de l'occupation de sa position de libération partielle et sa position de blocage de manière détachable sur le boîtier de soupape (6) et peut être retiré du boîtier de soupape (6) pour passer dans la position de libération complète, celui-ci se trouvant dans la position de libération complète de manière appropriée comme élément séparé, détaché complètement du boîtier de soupape (6).

4. Dispositif de soupape selon l'une quelconque des revendications 1 à 3, **caractérisé en ce que** l'élément de recouvrement (3) est fixé dans la position de libération partielle et dans la position de blocage respectivement de manière détachable sur le boîtier de soupape (6) de telle manière qu'il soit temporairement retirable du boîtier de soupape (6) pour permuter entre ces positions.

5. Dispositif de soupape selon l'une quelconque des revendications 1 à 4, **caractérisé en ce qu'**un emplacement de montage (63) pour l'élément de recouvrement (3) est présent à l'extérieur du boîtier de soupape (6) dans la zone de la section d'extrémité d'actionnement (47), sur lequel emplacement l'élément de recouvrement (3) est monté de manière détachable lors de l'occupation de sa position de libération partielle et lors de l'occupation de sa position de blocage.

6. Dispositif de soupape selon la revendication 5, **caractérisé en ce que** l'élément de recouvrement (3) peut être monté sur l'emplacement de montage (63) dans deux orientations différentes, celui-ci occupant dans une orientation la position de libération partielle et dans l'autre orientation la position de blocage.

7. Dispositif de soupape selon la revendication 6, **caractérisé en ce que** l'élément de recouvrement (3) présente un axe vertical (65) et est disposé non seulement dans la position de libération partielle mais aussi dans la position de blocage avec un axe vertical perpendiculaire à l'emplacement de montage (63) sur le boîtier de soupape (6), celui-ci occupant dans ces deux positions des orientations tournées de 180° par rapport à l'axe vertical (65).

8. Dispositif de soupape selon l'une quelconque des revendications 1 à 7, **caractérisé en ce que** l'élément de recouvrement (3) est encliqueté dans la position de libération partielle et dans la position de blocage respectivement de manière détachable avec le boîtier de soupape (6).

9. Dispositif de soupape selon la revendication 8, **caractérisé en ce que** le boîtier de soupape (6) présente un évidement de démontage (76) associé à la zone de bord de l'élément de recouvrement (3) et recouvert en partie par l'élément de recouvrement (3) lorsque l'élément de recouvrement (3) est monté, qui permet le placement d'un outil à levier pour le démontage de l'élément de recouvrement (3).

10. Dispositif de soupape selon la revendication 8 ou 9, **caractérisé en ce que** l'élément de recouvrement présente une section de recouvrement (64) en forme de plaque de manière appropriée et plusieurs saillies d'encliquetage (74) dépassant de la section de recouvrement (64), le boîtier de soupape (6) disposant de plusieurs cavités d'encliquetage (75), dans lesquelles l'élément de recouvrement (3) s'engage par encliquetage de manière détachable lors de l'occupation de la position de libération partielle et de la position de blocage, les mêmes cavités d'encliquetage (75) coagissant toujours avec une saillie d'encliquetage (74) de manière appropriée non seulement dans la position de libération partielle mais aussi dans la position de blocage.

11. Dispositif de soupape selon l'une quelconque des revendications 1 à 10, **caractérisé en ce que** l'élément de recouvrement (3) présente une section de recouvrement (64) en forme de plaque de manière appropriée qui recouvre dans une mesure plus ou moins importante la section d'extrémité d'actionnement (47) du coulisseau d'actionnement (37) selon la position occupée.

12. Dispositif de soupape selon l'une quelconque des revendications 1 à 11, **caractérisé en ce que** l'élément de recouvrement (3) recouvre complètement la section d'extrémité d'actionnement (47) lors de l'occupation de la position de blocage.

13. Dispositif de soupape selon l'une quelconque des revendications 1 à 12, **caractérisé en ce que** l'élément de recouvrement (3) présente une interruption d'actionnement (77) qui se trouve lors de l'occupation de la position de blocage à côté de la section d'extrémité d'actionnement (47) et lors de l'occupation de la position de libération partielle au-dessus de la section d'extrémité d'actionnement (47) et dont la section transversale est conçue de sorte que pour susciter l'actionnement par pression, un passage d'un outil d'actionnement pressant la section d'extrémité d'actionnement (47) soit possible, mais qu'à la fois il soit empêché qu'un outil d'actionnement convenant à la rotation de la section d'extrémité d'actionnement (47) puisse être enfiché et/ou tourné après un enfichage.

14. Dispositif de soupape selon la revendication 13, **caractérisé en ce que** la section d'extrémité d'actionnement (47) présente côté avant une fente transversale (62) permettant le placement d'une section en forme de lame d'un outil d'actionnement, l'interruption d'actionnement (77) de l'élément de recouvrement (3) présentant la forme d'un trou oblong et une configuration croisée se trouvant de manière appropriée entre la fente transversale (62) et l'interruption d'actionnement (77) lorsque la section d'extrémité d'actionnement (47) occupe la position de travail et l'élément de recouvrement (3) la position de libération partielle.

15. Dispositif de soupape selon l'une quelconque des revendications 1 à 14, **caractérisé en ce que** l'unité de soupape (2) présente un type de construction précommandé et dispose d'une soupape principale (4) avec un organe de soupape principale (7) ainsi que d'au moins une soupape de précommande (5) actionnable électriquement, servant à l'actionnement fluidique de la soupape principale (4), la soupape de précommande (5) présentant un organe de soupape de précommande (16) commandant l'alimentation fluidique de l'organe de soupape principale (7), auquel est associé le dispositif d'actionnement auxiliaire manuel (36).
